# EUROPÄISCHE PATENTSCHRIFT

(11) **EP 2 755 793 B1**
(45) Veröffentlichungstag und Bekanntmachung des Hinweises auf die Patenterteilung: **06.04.2016**
(21) Anmeldenummer: 12765997.7
(22) Anmeldetag: 13.09.2012
(51) Int. Cl.: B23K 26/00, B23K 26/06, B23K 26/08

(54) **VERFAHREN UND VORRICHTUNG ZUM STRUKTURIEREN VON WERKSTÜCKOBERFLÄCHEN DURCH BEARBEITUNG MIT ZWEI ENERGETISCHEN STRAHLUNGEN**
METHOD AND APPARATUS FOR STRUCTURING WORKPIECE SURFACES BY MACHINING WITH TWO BUNDLES OF ENERGETIC RADIATION
PROCEDE ET DISPOSITIF PERMETTANT DE STRUCTURER DES SURFACES DE PIECES PAR USINAGE AU MOYEN DE DEUX RAYONNEMENTS ENERGETIQUES

(30) Priorität: 13.09.2011 DE 102011113246
(43) Veröffentlichungstag der Anmeldung: 23.07.2014
(73) Patentinhaber: Fraunhofer Gesellschaft zur Förderung der angewandten Forschung e.V., 80686 München (DE); RWTH Aachen, 52056 Aachen (DE)
(72) Erfinder: TEMMLER, André, 52062 Aachen (DE); WILLENBORG, Edgar, 52146 Würselen (DE); MORASCH, Valentin, 52134 Herzogenrath (DE)
(86) Internationale Anmeldenummer: PCT/EP2012/003847
(87) Internationale Veröffentlichungsnummer: WO 2013/037496

(56) Entgegenhaltungen:
- WO-A1-2010/067042
- DE-A1-102008 045 533
- DE-B4- 10 342 750
- JP-A- 2001 044 120
- US-A1- 2006 085 081

## Beschreibung

Die Anmeldung betrifft ein Verfahren zum Strukturieren von Oberflächen durch Bearbeitung mit energetischer Strahlung, bei dem ein erstes Bündel energetischer Strahlung während eines Bearbeitungsvorgangs für eine vorbestimmte Zeitdauer auf die zu bearbeitende Oberfläche gerichtet wird und das erste Strahlenbündel betreffende Bearbeitungsparameter so gewählt werden, dass das erste Strahlenbündel ein Schmelzbad in der zu bearbeitenden Oberfläche erzeugt. Die Anmelduna betrifft außerdem eine Vorrichtung zum Durchführen des Verfahrens.

Für die Strukturierung von Oberflächen wird eine Vielzahl unterschiedlicher mechanischer, chemischer und optischer Verfahren bzw. eine Kombination aus verschiedenen Verfahren eingesetzt. Das Gros dieser Verfahren hat dabei gemein, dass die Strukturierung einer Oberfläche vornehmlich durch einen wie auch immer gearteten Abtrag von Material erfolgt. Verfahren, bei denen lokal Material aufgetragen wird, um eine Strukturierung zu erzielen, sind entweder sehr langsam, z.B. Epitaxie, oder benötigen weitere Nachbearbeitungsschritte, z.B. Laserauftragschweißen oder Selektives Laserschmelzen. Alle Verfahren haben allerdings gemeinsam, dass ein nicht unbeträchtlicher Teil des Materials, sei es beim Auftrag, sei es bei der Ablation, für weitere Fertigungsschritte verloren geht.

Bisher existieren nur zwei Verfahren, die eine Strukturierung von Oberflächen nahezu ohne einen Verlust von Material ermöglichen, indem eine Umverteilung von Material, das mittels Laserstrahlung geschmolzen wird, stattfindet. Das eine Verfahren ist das sogenannte SurfiSculpt^{™}, bei dem eine Strukturierung durch Ein- und Ausschalten der Laserstrahlung erfolgt.

Das andere Verfahren ist in dem nächstliegender Stand der Technik diesen Erfindung DE 103 42 750 B4 beschrieben. Bei diesem Verfahren wird eine zu bearbeitende Oberfläche in einer ersten Bearbeitungsstufe unter Einsatz von kontinuierlicher Laserstrahlung oder gepulster Laserstrahlung mit langen Pulslängen mit ersten Bearbeitungsparametern einmal oder mehrmals nacheinander entlang einer Bearbeitungsbahn bis zu einer ersten Umschmelztiefe umgeschmolzen, wobei die Intensität der auf die Oberfläche treffenden Laserstrahlung oder deren Wechselwirkungszeit mit der Oberfläche oder beides bei mindestens einem Umschmelzvorgang moduliert wird, wodurch eine erwünschte Strukturierung der Oberfläche erzeugt wird. Durch das Umschmelzen werden gleichzeitig Makrorauigkeiten beseitigt. Zudem ist offenbart, dass zusätzlich in einer zweiten Bearbeitungsstufe unter Einsatz der Laserstrahlung mit zweiten Bearbeitungsparametern nach der ersten Bearbeitungsstufe verbleibende Mikrorauigkeiten durch Umschmelzen bis zu einer zweiten Umschmelztiefe, die kleiner als die erste Umschmelztiefe ist, und Verdampfen von Rauigkeitsspitzen eingeebnet werden.

Allerdings sind beide Verfahren hinsichtlich der Geometrie der erzeugten Oberflächenstrukturen Begrenzungen unterworfen. Geometrische Abweichungen von der Sollstruktur werden durch eine oftmals größere Anzahl von Bearbeitungsschritten reduziert oder durch eine Kombination von verschiedenen konventionellen Verfahren, was vielfach in einen großen Zeit- und Kostenaufwand mündet.

Die Aufgabe der vorliegenden Erfindung ist daher, ein Verfahren und eine Vorrichtung zum Strukturieren von Oberflächen durch Bearbeitung mit energetischer Strahlung bereitzustellen, womit strukturierte Oberflächen schnell und kostengünstig hergestellt werden können.

Diese Aufgabe wird erfindungsgemäß durch ein Verfahren gemäß Patentanspruch 1 gelöst. Vorteilhafte Ausgestaltungen der Erfindung sind in den abhängigen Patentansprüchen angegeben oder lassen sich aus der nachfolgenden Beschreibung entnehmen. Gemäß einem weiteren Aspekt der Erfindung wird diese Aufgabe durch eine Vorrichtung mit den Merkmalen des Patentanspruchs 12 gelöst.

Der vorliegenden Erfindung liegt die Erkenntnis zugrunde, dass das Verhältnis von Höhe zu Breite von erzeugten Strukturen, auch Schacht- oder Aspektverhältnis genannt, vergrößert werden kann, wenn die Wirkung von zwei Bündeln energetischer Strahlung kombiniert wird, wobei ein Strahlenbündel dazu dient, ein Schmelzbad in der zu bearbeitenden Oberfläche zu erzeugen, während das andere Strahlenbündel dazu dient, das Schmelzbad vorzugsweise lokal zu deformieren, so dass Strukturen mit kleinerer lateraler Ausdehnung und größerer Höhe bzw. Tiefe als mit konventionellen Verfahren erzeugt werden können. Untersuchungen haben ergeben, dass keine zufriedenstellenden Strukturhöhen erzielt werden können, wenn die zugehörigen Strukturbreiten den Durchmesser des das Schmelzbad erzeugenden Strahlenbündels wesentlich unterschreiten. Dieser Umstand ist dadurch erklärbar, dass eine Verformung des Schmelzbades von der Massenträgheit des Schmelzbades gedämpft wird. Den Strahldurchmesser und damit das Schmelzbad kleiner zu machen, führt aber auch nicht zum gewünschten Ergebnis, da nur das zum gegebenen Zeitpunkt gerade flüssige Material für eine Strukturierung zur Verfügung steht, so dass die erreichbaren Strukturhöhen durch das Schmelzbadvolumen begrenzt sind. Durch die Verwendung eines zweiten Strahlenbündels, das dem Schmelzbad gezielt zusätzliche Energie zuführt, wird das Schmelzbad angeregt und dadurch eine stärkere Deformation und damit ein größeres Aspektverhältnis ermöglicht. Vorzugsweise wird durch die Wirkung des zweiten Strahlenbündels eine im Vergleich zum Volumen des Schmelzbades geringe Menge an Material, insbesondere weniger als zehn Prozent des Schmelzbadvolumens, aus dem Schmelzbad verdampft. Dadurch wird lokal ein großer Druck erzeugt, der eine besonders starke Deformation des Schmelzbades bewirkt. Je nach gewünschtem Ergebnis können auch mehr als zwei Strahlenbündel kombiniert werden.

Mit dem erfindungsgemäßen Verfahren lässt sich die Schmelzbadoberfläche gezielt beeinflussen und es kann eine schnelle, ortsgenaue und möglichst große Änderung einer Oberflächengestalt des Schmelzbades erreicht werden, wodurch eine größere Auswahl an Strukturen und größere Prozessgeschwindigkeiten realisierbar werden.

Insbesondere erfolgt die Bearbeitung während des Bearbeitungsvorgangs auf der zu bearbeitenden Oberfläche entlang einer kontinuierlichen Bearbeitungsbahn, die vorzugsweise mäanderförmig verläuft, oder mehrerer aufeinander folgender diskreter Bearbeitungsbahnen, die vorzugsweise nebeneinander angeordnet sind und alle in derselben Richtung durchlaufen werden, so dass das durch das erste Strahlenbündel erzeugte Schmelzbad sich entlang der jeweiligen Bearbeitungsbahn fortbewegt. Die Bearbeitungsbahnen, die man auch als Umschmelzspuren bezeichnen kann, können auch zufällig verteilt auf der zu bearbeitenden Oberfläche angeordnet sein. Vorzugsweise werden die überlagerten Strahlenbündel über die zu bearbeitende Oberfläche geführt. Stattdessen kann aber auch die zu bearbeitende Oberfläche relativ zu den Strahlenbündeln bewegt werden.

Bei der energetischen Strahlung kann es sich insbesondere um Laserstrahlen oder auch um Elektronenstrahlen handeln. Im Folgenden werden die Begriffe "Strahlenbündel" und "Strahl" synonym verwendet. Bei dem ersten Strahlenbündel handelt es sich vorzugsweise um kontinuierliche Laserstrahlung. Gepulste Laserstrahlung zu verwenden, ist aber ebenso denkbar. Für das mindestens eine zweite Strahlenbündel wird vorzugsweise gepulste Laserstrahlung verwendet. Je nach dem zu erzielenden Ergebnis kann aber auch kontinuierliche Laserstrahlung vorteilhaft sein.

Gemäß einer bevorzugten Ausgestaltung der Erfindung weist die Laserstrahlung des ersten Bündels eine andere Wellenlänge auf als die Laserstrahlung des zweiten Bündels. Das hat den Vorteil, dass die beiden Strahlenbündel auf einfache Weise, insbesondere mittels eines Wellenlängen-Multiplexers, überlagert werden können.

Gemäß einer weiteren bevorzugten Ausgestaltung der Erfindung wird das Schmelzbadvolumen während des Bearbeitungsvorgangs durch eine Veränderung der durch das erste Strahlenbündel auf die Oberfläche einwirkenden Leistung oder der Wechselwirkungszeit des ersten Strahlenbündels mit der Oberfläche kontrolliert verändert. Es können aber auch sowohl die durch das erste Strahlenbündel auf die Oberfläche einwirkende Leistung als auch die Wechselwirkungszeit des ersten Strahlenbündels mit der Oberfläche kontrolliert verändert werden.

Gemäß noch einer weiteren bevorzugten Ausgestaltung der Erfindung wird die Deformation des Schmelzbades während des Bearbeitungsvorgangs durch eine Veränderung der durch das zweite Strahlenbündel auf die Oberfläche einwirkenden Leistung oder der Wechselwirkungszeit des zweiten Strahlenbündels mit der Oberfläche kontrolliert verändert. Es können aber auch sowohl die durch das zweite Strahlenbündel auf die Oberfläche einwirkende Leistung als auch die Wechselwirkungszeit des zweiten Strahlenbündels mit der Oberfläche kontrolliert verändert werden.

Die Wechsetwirkungszeit kann insbesondere über die Geschwindigkeit, mit der die Strahlenbündel und die zu bearbeitende Oberfläche relativ zueinander bewegt werden, bestimmt werden. Neben der Laserleistung können bei gepulster Laserstrahlung auch die Pulsfrequenz und die Pulsdauer moduliert werden. Zu den Bearbeitungsparametern, die für die jeweiligen Strahlenbündel eingestellt werden können, um den Bearbeitungsvorgang zu beeinflussen, gehören außerdem der Durchmesser sowie der Querschnitt des jeweiligen Strahlenbündels und die Intensitätsverteilung über den Querschnitt. Insbesondere kann der Strahldurchmesser durch die Verwendung von Teleskopen während des Bearbeitungsvorgangs dynamisch angepasst werden. Besonders bevorzugt erfolgt die kontrollierte Veränderung der Leistung und/oder der Wechselwirkungszeit des ersten und/oder des zweiten Strahlenbündels durch eine Regelung der Bearbeitungsparameter während des Bearbeitungsvorgangs.

Gemäß einer weiteren bevorzugten Ausgestaltung der Erfindung ist das mindestens eine zweite Strahlenbündel relativ zum ersten Strahlenbündel ortsfest.

Gemäß einer alternativen bevorzugten Ausgestaltung der Erfindung führt das mindestens eine zweite Strahlenbündel relativ zum ersten Strahlenbündel eine Bewegung auf der Oberfläche des Schmelzbades aus. Dabei kann außerdem die Geschwindigkeit der Relativbewegung des zweiten Strahlenbündels gegenüber dem ersten Strahlenbündel während des Bearbeitungsvorgangs verändert werden.

Gemäß einer weiteren bevorzugten Ausgestaltung der Erfindung wird das mindestens eine zweite Strahlenbündel in periodischen oder aperiodischen Zyklen zugeschaltet.

Die im Zusammenhang mit dem erfindungsgemäßen Verfahren beschriebenen bevorzugten Ausführungsformen und Vorteile gelten, soweit anwendbar, auch für die erfindungsgemäße Vorrichtung.

Weitere Vorteile, Merkmale und Einzelheiten der Erfindung ergeben sich aus der nachfolgenden Beschreibung eines bevorzugten Ausführungsbeispiels sowie anhand der Zeichnungen.

Es zeigen:
Figur 1 die Strukturierung einer Werkstückoberfläche durch Umschmelzen in Schnittansicht;
Figur 2a) eine schematische Schnittansicht des Umschmelzvorgangs gemäß Figur 1;

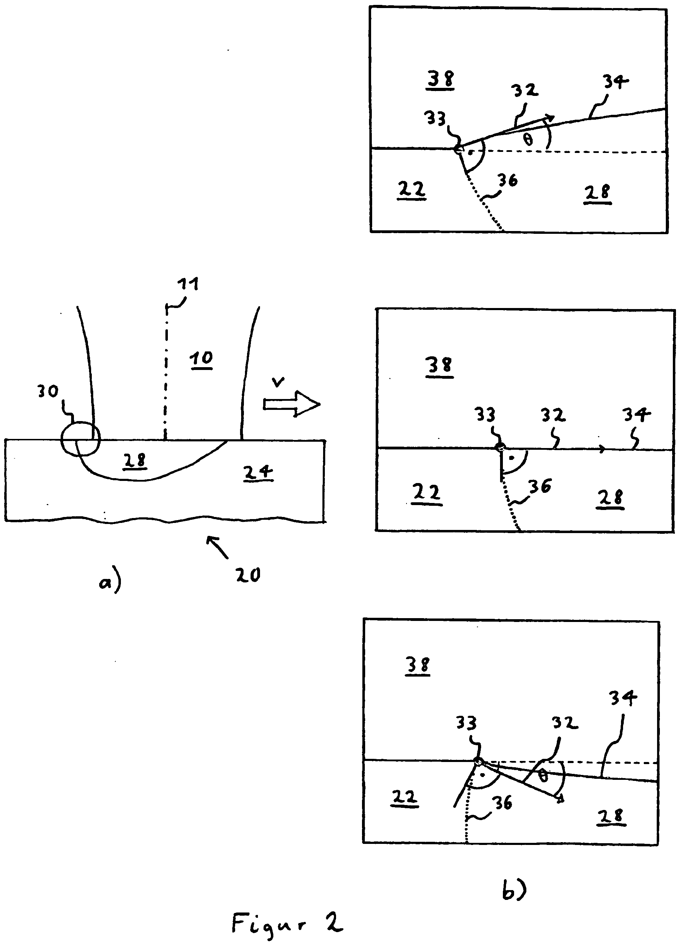

Figur 2a) einen Ausschnitt aus Figur 2a) in vergrößerter Darstellung;

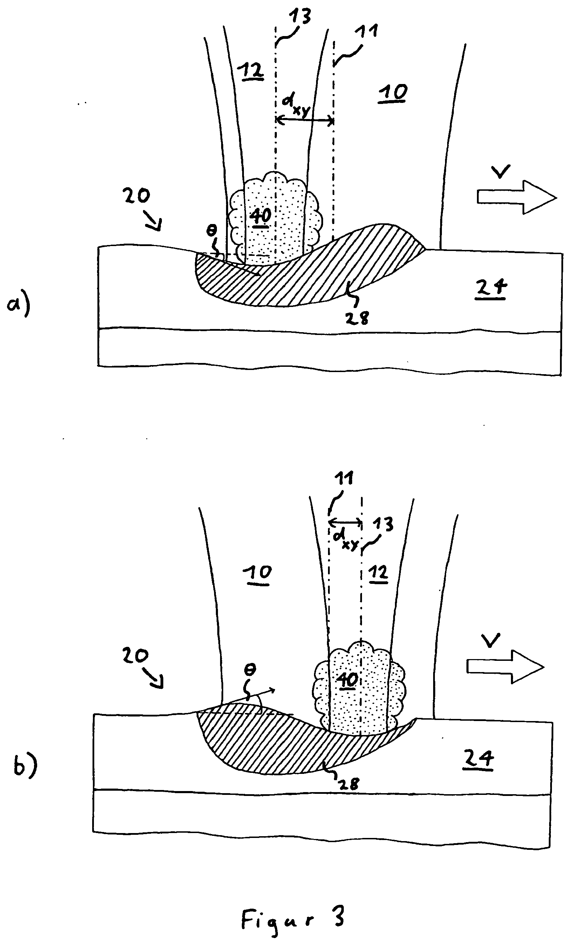

Figuren 3a) und b) schematische Schnittansichten eines Umschmelzvorgangs unter Verwendung einer Kombination von Strahlenbündeln; und

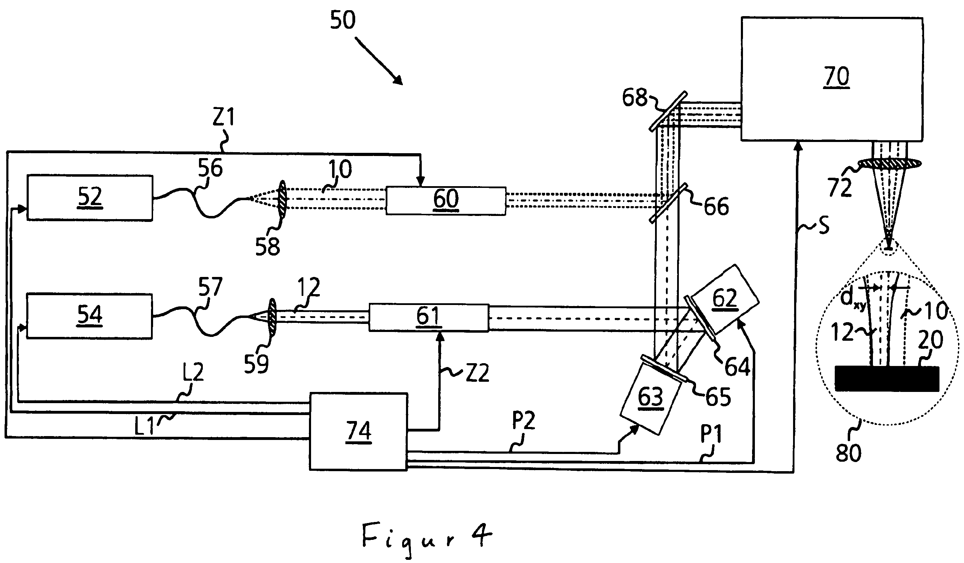

Figur 4 eine Vorrichtung zum Strukturieren von Werkstückoberflächen durch Umschmelzen mittels Laserstrahlung.

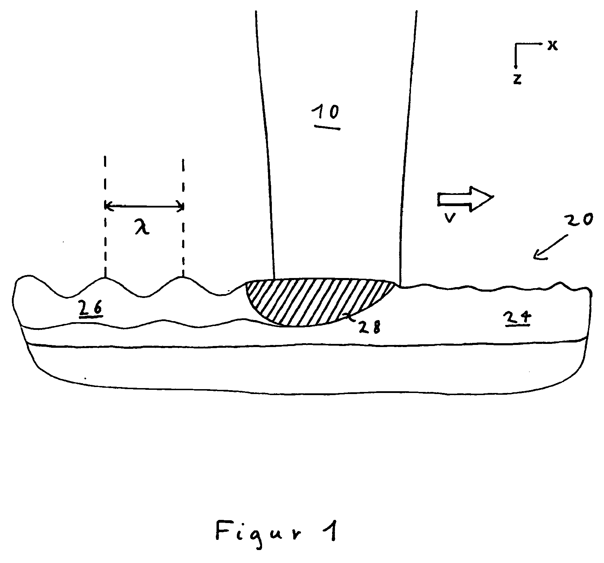

Anhand des in den Figuren 1 und 2 gezeigten Beispiels soll im Folgenden die prinzipielle Funktionsweise des Strukturierens von Oberflächen mittels Umschmelzen dargestellt werden.

Figur 1 zeigt einen Ausschnitt eines Werkstücks 20, das mit einem Laserstrahl 10 behandelt wird, der, wie durch einen Pfeil angedeutet, mit der Geschwindigkeit v in x-Richtung entlang einer Bearbeitungsbahn über die Werkstückoberfläche geführt wird, in Schnittansicht. Rechts vom Laserstrahl 10 ist die Werkstückoberfläche in unbehandeltem Zustand zu erkennen. Im Auftreffbereich, wo der Laserstrahl 10 auf die Werkstückoberfläche auftrifft, schmilzt das Material des Werkstücks 20 und es entsteht ein Schmelzbad 28, wobei zumindest bei kontinuierlicher Laserstrahlung aufgrund der Wärmeleitung die laterale Ausdehnung des Schmelzbades 28 im Allgemeinen größer als der Durchmesser des Laserstrahls 10 ist. Zu einer Wärmeeinflusszone des Laserstrahls 10 gehört neben dem Schmelzbad 28 auch der Bereich um den Auftreffbereich des Laserstrahls 10, in dem eine Randschicht 24 des Werksstücks 20 sich durch die Wirkung des Laserstrahls 10 erwärmt. Dabei wandern durch die Bewegung des Laserstrahls 10 die Wärmeeinflusszone und das Schmelzbad 28 während eines Bearbeitungsvorgangs mit dem Laserstrahl 10 mit. Dadurch entsteht eine Umschmelzschicht 26 aus Material, das geschmolzen wurde und wieder erstarrt ist. Links neben dem Laserstrahl 10 ist die Werkstückoberfläche nach der Laserbehandlung dargestellt. Sie zeigt eine wellenförmige Struktur, die durch eine sinusförmige Modulation eines Bearbeitungsparameters, wie beispielsweise der Laserleistung, erzeugt wird, wobei Modulation in diesem Zusammenhang für eine zeitliche oder örtliche Veränderung eines Bearbeitungsparameters stehen soll, die nicht notwendigerweise periodisch sein muss. Der Abstand zwischen zwei Bergen oder zwei Tälern wird als Strukturbreite bezeichnet. Im Falle periodischer Strukturen kann auch von Wellenlänge A der Struktur, wie in Figur 1 angedeutet, gesprochen werden.

Der Vorgang des Strukturierens wird im Zusammenhang mit Figur 2 genauer erläutert. Figur 2a) zeigt schematisch die Behandlung des Werkstücks 20 mit dem Laserstrahl 10. Die strichpunktierte Linie stellt die Mittelachse 11 des Strahls dar. Der Pfeil deutet an, dass sich der Laserstrahl 10 mit der Geschwindigkeit v relativ zur Werkstückoberfläche bewegt. Durch die Wirkung des Laserstrahls 10 entsteht in der Randschicht 24 des Werkstücks 20 ein Schmelzbad 28 aus geschmolzenem Material, wobei durch die Bewegung des Strahls 10 relativ zur Werkstückoberfläche am in Bewegungsrichtung gesehen vorderen Ende des Schmelzbades 28 Material aus dem festen Zustand in Schmelze übergeht, während am in Bewegungsrichtung gesehen hinteren Ende 30 des Schmelzbades 28 Material, das nicht mehr bestrahlt wird, abkühlt und erstarrt.

In Figur 2b) ist der Ausschnitt 30 aus Figur 2a) für drei verschiedene Fälle vergrößert dargestellt. Der Pfeil 32 gibt die Erstarrungsrichtung an, die die Tangente an der Schmelzbadoberfläche 34 im Dreiphasenpunkt 33 ist. Die Schmelzbadoberfläche 34 wiederum ist, sofern eine Wärmekonvektion zwischen Schmelze und Atmosphäre 38 vernachlässigbar ist und adiabatische Randbedingungen angenommen werden können, senkrecht zur Erstarrungsfront 36, die die Grenze zwischen der festen Phase 22 und der flüssigen Phase 28 darstellt. Eine Aufwölbung des Schmelzbades ist hauptsächlich von der in die Werkstückoberfläche eingebrachten Laserleistung, die eine thermische Dehnung der Schmelze und eine Volumenzunahme aufgrund des Phasensprunges von fest nach flüssig bewirkt, und dem Leistungsgradienten, der den Unterschied zwischen Erstarrungs- und Schmelzrate bestimmt, abhängig. Bei konstanter Laserleistung ist die Schmelzbadoberfläche 34 näherungsweise flach und es findet keine Strukturierung statt, wie im mittleren Bild zu sehen ist. Bei steigender Laserleistung nimmt das Volumen des Schmelzbades 28 zu. Das vergrößerte Schmelzbadvolumen führt zu einer Aufwölbung des Schmelzbades 28. Die Erstarrung erfolgt auch in diesem Fall entlang der Schmelzbadoberfläche 34, so dass eine Erhebung strukturiert wird, wie in der oberen Skizze dargestellt ist. Der Neigungswinkel der Erstarrungsrichtung 32 gegenüber der durch eine gestrichelte Linie angedeuteten Horizontalen ist mit Θ bezeichnet. Bei kleiner werdender Laserleistung schließlich funktioniert der Prozess genau umgekehrt, so dass, wie im unteren Bild zu sehen ist, ein Tal strukturiert wird. So können durch Modulation der eingebrachten Laserleistung Strukturen auf der Werkstückoberfläche durch Umverteilung des Materials erzielt werden. Die Höhe der Struktur wird dabei wesentlich durch den Erstarrungswinkel Θ bestimmt.

Anhand der Figuren 3a) und b) soll nun beispielhaft beschrieben werden, wie schnelle und große Änderungen des Erstarrungswinkels Θ durch Überlagerung von zwei oder mehr Strahlenbündeln erreicht werden. Zusätzlich zu dem Laserstrahl 10 mit der Mittelachse 11 wird das Werkstück 20 von einem Laserstrahl 12 mit einer Mittelachse 13 bestrahlt. Die beiden Laserstrahlen 10 und 12 sind um den Abstand d_{xy} gegeneinander versetzt. Der Laserstrahl 10 erzeugt, wie bereits im Zusammenhang mit den Figuren 1 und 2 beschrieben, ein Schmelzbad 28 in einer Randschicht 24 des Werkstücks 20. Dabei können die Bearbeitungsparameter konstant gehalten oder gemäß Figur 2b) moduliert werden. Der Abstand d_{xy} wird dabei so gewählt, dass der zweite Strahl 12 auf der vom ersten Strahl 10 erzeugten Schmelzbadoberfläche auftrifft. Zusätzlich können auch noch weitere Laserstrahlen auf die vom ersten Strahl 10 erzeugte Schmelzbadoberfläche 28 gerichtet werden. Der zweite Strahl 12 und eventuelle weitere Strahlen bewirken eine zusätzliche Deformation des Schmelzbades 28 und damit eine Vergrößerung des Erstarrungswinkels Θ gegenüber der Verwendung von nur einem Laserstrahl. Vorzugsweise werden die Bearbeitungsparameter der zusätzlichen Laserstrahlen so gewählt, dass dadurch eine im Vergleich zum Volumen des Schmelzbades 28 geringe Menge an schmelzflüssigem Material verdampft wird, wie in den Figuren 3a) und b) durch eine Wolke 40 angedeutet ist. Hierbei soll eine geringe Menge insbesondere weniger als zehn Prozent des schmelzflüssigen Materials bedeuten. Durch den bei der Verdampfung entstehenden Dampfdruck wird die Schmelzbadoberfläche besonders stark deformiert und der Erstarrungswinkel Θ signifikant geändert, so dass die gewünschte Strukturierung der Oberfläche erfolgt. Der zweite Strahl 12 kann dabei relativ zur Schmelzbadoberfläche ortsfest sein, sich auf einer wie auch immer gearteten Bahnbewegung auf der Schmelzbadoberfläche bewegen und/oder in periodischen oder aperiodischen Zyklen zu- oder abgeschaltet werden. Der Strahldurchmesser des zweiten Strahls 12 ist dabei gleich groß oder kleiner als die erzeugte Schmelzbadoberfläche. Verwendete Leistungen können konstant gehalten oder moduliert werden, während die relative Verfahrgeschwindigkeit der Laserstrahlen 10 und 12 zueinander konstant sein oder dynamisch verändert werden kann. Die Strukturierung von Oberflächen erfolgt dabei auf einer zusammenhängenden Umschmelzspur beliebiger Länge bzw. auf einzelnen Umschmelzspuren mit beliebiger Richtung und Länge, die systematisch oder zufällig auf einer Oberfläche angeordnet sind und einfach oder mehrfach bearbeitet werden können. Die Strukturierung erfolgt üblicherweise in einer Prozessgasatmosphäre. Prozessgase können dabei Luft, Edelgase, Sauerstoff, Stickstoff, Kohlendioxid, Formiergas oder Vakuum bzw. nahezu beliebige Kombinationen aus diesen Gasen in unterschiedlichen Mischungsverhältnissen sein. Die Möglichkeit einer Strukturierung mittels dieses Verfahrens erstreckt sich auf alle Materialen die eine schmelzflüssige Phase besitzen. Gleichzeitig erfolgt durch das umschmelzende Verfahrensprinzip eine Homogenisierung der Umschmelzschicht.

Eine Vorrichtung 50 zum Strukturieren von Werkstückoberflächen mittels energetischer Strahlung gemäß einem bevorzugten Ausführungsbeispiel der Erfindung wird anhand der Prinzipskizze von Figur 4 erläutert. Ein erster Laser 52 sendet Laserstrahlung 10 aus, die vorzugsweise kontinuierlich ist und beispielsweise die Wellenlänge 1030 nm hat. Ein zweiter Laser 54 sendet Laserstrahlung 12 aus, die vorzugsweise gepulst ist und beispielsweise die Wellenlänge 1064 nm hat. Die von den beiden Lasern 52 und 54 ausgesendete Strahlung sollte sich hinsichtlich ihrer Wellenlänge mindestens um 5 bis 10 nm unterscheiden, damit die beiden Strahlengänge mittels eines Wellenlängenmultiplexers zu einem Strahlengang kombiniert werden können. Lichtleitkabel 56 und 57 dienen dazu, die Laserstrahlen 10 und 12 in einen optischen Aufbau einzukoppeln. Der optische Aufbau umfasst eingangsseitig für jeden Laserstrahl 10 und 12 jeweils eine durch eine Linse dargestellte Kollimationsoptik 58 und 59 zum Parallelisieren der Laserstrahlen 10 und 12. Ferner ist im Strahlengang der Laserstrahlen 10 und 12 jeweils ein stufenlos verfahrbares Zoomteleskop 60 und 61 angeordnet, durch das der jeweilige Durchmesser der Laserstrahlen 10 und 12 einstellbar ist. Zwei mittels Piezo-Aktoren 62 und 63 eindimensional verkippbare Spiegel 64 und 65 ermöglichen eine schnelle zweidimensionale Ablenkung des zweiten Laserstrahls 12, wodurch dieser gegenüber dem ersten Laserstrahl 10 auf einer zu bearbeitenden Oberfläche eines Werkstücks 20 verschoben wird. Ein Wellenlängenmultiplexer 66 ist derart beschichtet, dass er eine große Transmission für Laserstrahlung des zweiten Lasers 54 und zumindest auf einer Seite eine hohe Reflektivität für Laserstrahlung des ersten Lasers 52 besitzt, und so an einer Kreuzung der beiden Strahlengänge angeordnet, dass er eine Überlagerung der beiden Laserstrahlen 10 und 12 bewirkt. Die beiden überlagerten Laserstrahlen 10 und 12 treffen schließlich auf einen Spiegel 68, mit dessen Hilfe sie zu einem Laserscannersystem 70 gelenkt werden. Vorzugsweise handelt es sich bei dem Laserscannersystem 70 um ein 3D-Laserscannersystem, das sowohl eine Einstellung des Fokus der überlagerten Strahlen 10 und 12 als auch deren Ablenkung in zwei Richtungen ermöglicht. So können die überlagerten Laserstrahlen 10 und 12 auch über Oberflächen mit dreidimensionaler Gestalt bewegt werden. An einem Ausgang des optischen Aufbaus ist ein als Linse dargestelltes F-Theta-Objektiv 72 angeordnet, das dazu dient, die aus dem Laserscannersystem 70 austretende Strahlung auf die Werkstückoberfläche zu fokussieren.

Die Vorrichtung 50 umfasst außerdem eine Steuerung 74 mit Ausgängen für Steuersignale L1 und L2 zum Modulieren der Laserleistung, Steuersignale Z1 und Z2 zum dynamischen Verändern der Durchmesser der beiden überlagerten Strahlen 10 und 12 am Werkstück 20 mittels der Zoomteleskope 60 und 61, Steuersignale P1 und P2 zum Ansteuern der Piezo-Aktoren 62 und 63, um eine Relativbewegung und wahlweise eine Relativgeschwindigkeit des zweiten Laserstrahls 12 gegenüber dem ersten Laserstrahl 10 zu steuern, und ein Steuersignal S zum Steuern der Bewegung und Modulieren der Geschwindigkeit der überlagerten Laserstrahlen 10 und 12 gegenüber dem Werkstück 20.

Das Werkstück 20 ist in dem gestrichelten Kreis 80 nochmals vergrößert dargestellt, so dass man erkennen kann, dass die Mittelachse 13 des zweiten Laserstrahls 12 gegenüber der Mittelachse 11 des ersten Laserstrahls 10 in der Bearbeitungsebene um den Abstand d_{xy} versetzt ist, der eine Funktion der Verkippungswinkel der Piezoaktoren 62 und 63 ist.

Anstatt der vorstehend beschriebenen zwei eindimensional verkippbaren Spiegel 64 und 65 ließe sich auch ein um zwei Achsen verkippbarer Spiegel verwenden, solange eine im Wesentlichen konstante Ablenkung des zweiten Laserstrahls 12 oder eine Bewegung des zweiten Laserstrahls 12 gegenüber dem ersten Laserstrahl 10 mit vergleichsweise kleiner Geschwindigkeit erfolgen soll.

Für den Fall, dass beide Laserstrahlen 10 und 12 kontinuierlich oder beide gepulst sein sollen, ist als weitere Alternative auch denkbar, nur einen Laser zu verwenden und die von diesem ausgesendete Strahlung mittels eines Strahlteilers in zwei Strahlen 10 und 12 aufzuteilen.

## Patentansprüche

1. Verfahren zum Strukturieren von Oberflächen durch Bearbeitung mit energetischer Strahlung, bei dem ein erstes Bündel (10) energetischer Strahlung während eines Bearbeitungsvorgangs für eine vorbestimmte Zeitdauer auf die zu bearbeitende Oberfläche gerichtet wird und das erste Strahlenbündel (10) betreffende Bearbeitungsparameter so gewählt werden, dass das erste Strahlenbündel (10) ein Schmelzbad (28) in der zu bearbeitenden Oberfläche erzeugt, **dadurch gekennzeichnet, dass** mindestens ein zweites Bündel (12) energetischer Strahlung dem ersten Bündel (10) zumindest in vorbestimmten Zeitabschnitten so überlagert wird, dass es zumindest teilweise innerhalb der Ausdehnung des Schmelzbades (28) auf der zu bearbeitenden Oberfläche auftrifft und die durch das mindestens eine zweite Strahlenbündel (12) auf die Oberfläche einwirkende Leistung und die Wechselwirkungszeit des mindestens einen zweiten Strahlenbündels (12) mit der Oberfläche so gewählt werden, dass das Schmelzbad (28) deformiert wird, um eine Strukturierung der zu bearbeitenden Oberfläche mittels Umschmelzen zu erzielen.

2. Verfahren nach Anspruch 1, **dadurch gekennzeichnet, dass** die durch das mindestens eine zweite Strahlenbündel (12) auf die Oberfläche einwirkende Leistung und die Wechselwirkungszeit des mindestens einen zweiten Strahlenbündels (12) mit der Oberfläche so gewählt werden, dass eine im Vergleich zum Volumen des Schmelzbades (28) geringe Menge an Material aus dem Schmelzbad (28) verdampft.

3. Verfahren nach Anspruch 1 oder 2, **dadurch gekennzeichnet, dass** die Bearbeitung während des Bearbeitungsvorgangs entlang einer kontinuierlichen Bearbeitungsbahn oder mehrerer aufeinander folgender diskreter Bearbeitungsbahnen auf der zu bearbeitenden Oberfläche erfolgt, so dass das durch das erste Strahlenbündel (10) erzeugte Schmelzbad (28) sich entlang der jeweiligen Bearbeitungsbahn fortbewegt.

4. Verfahren nach einem der vorhergehenden Ansprüche, **dadurch gekennzeichnet, dass** es sich bei der energetischen Strahlung um Laserstrahlung handelt, wobei es sich insbesondere bei dem ersten Strahlenbündel (10) um kontinuierliche Laserstrahlung und bei dem mindestens einen zweiten Strahlenbündel (12) um gepulste Laserstrahlung handelt.

5. Verfahren nach Anspruch 4, **dadurch gekennzeichnet, dass** die Laserstrahlung des ersten Bündels (10) eine andere Wellenlänge aufweist als die Laserstrahlung des zweiten Bündels (12).

6. Verfahren nach einem der vorhergehenden Ansprüche, **dadurch gekennzeichnet, dass** das Volumen des Schmelzbades (28) während des Bearbeitungsvorgangs durch eine Veränderung der durch das erste Strahlenbündel (10) auf die Oberfläche einwirkenden Leistung und/oder der Wechselwirkungszeit des ersten Strahlenbündels (10) mit der Oberfläche kontrolliert verändert wird.

7. Verfahren nach einem der vorhergehenden Ansprüche, **dadurch gekennzeichnet, dass** die Deformation des Schmelzbades (28) während des Bearbeitungsvorgangs durch eine Veränderung der durch das zweite Strahlenbündel (12) auf die Oberfläche einwirkenden Leistung und/oder der Wechselwirkungszeit des zweiten Strahlenbündels (12) mit der Oberfläche kontrolliert verändert wird.

8. Verfahren nach Anspruch 6 oder 7, **dadurch gekennzeichnet, dass** die kontrollierte Veränderung der Leistung oder der Wechselwirkungszeit durch eine Regelung der Bearbeitungsparameter während des Bearbeitungsvorgangs erfolgt.

9. Verfahren nach einem der vorhergehenden Ansprüche, **dadurch gekennzeichnet, dass** das mindestens eine zweite Strahlenbündel (12) gegenüber dem ersten Strahlenbündel (10) abgelenkt wird, wobei insbesondere das mindestens eine zweite Strahlenbündel (12) relativ zum ersten Strahlenbündel (10) ortsfest ist.

10. Verfahren nach einem der Ansprüche 1 bis 8, **dadurch gekennzeichnet, dass** das mindestens eine zweite Strahlenbündel (12) relativ zum ersten Strahlenbündel (10) eine Bewegung auf der Oberfläche des Schmelzbades (28) ausführt, wobei insbesondere die Geschwindigkeit der Relativbewegung während des Bearbeitungsvorgangs verändert wird.

11. Verfahren nach einem der vorhergehenden Ansprüche, **dadurch gekennzeichnet, dass** das mindestens eine zweite Strahlenbündel (12) in periodischen oder aperiodischen Zyklen zugeschaltet wird.

12. Vorrichtung zum Strukturieren von Oberflächen durch Bearbeitung mit energetischer Strahlung, wobei die Vorrichtung (50) eine erste Strahlenquelle (52, 56, 58, 60) zum Bereitstellen eines ersten Bündels (10) energetischer Strahlung, eine zweite Strahlenquelle (54, 57, 59, 61, 62, 63, 64, 65) zum Bereitstellen mindestens eines zweiten Bündels (12) energetischer Strahlung, eine Überlagerungseinrichtung (66) zum Überlagern der mindestens zwei Strahlenbündel (10, 12) zu einer Kombination von Strahlenbündeln (10, 12) und eine Bewegungseinrichtung (70) zum Ausführen einer kontrollierten Relativbewegung zwischen der Kombination von Strahlenbündeln (10, 12) und der zu bearbeitenden Oberfläche während eines Bearbeitungsvorgangs umfasst, wobei das erste Strahlenbündel (10) betreffende Bearbeitungsparameter so einstellbar sind, dass ein Schmelzbad (28) in der zu bearbeitenden Oberfläche erzeugt wird und wobei die zweite Strahlenquelle eine Ablenkeinrichtung (62, 63, 64, 65) zum Ablenken des mindestens einen zweiten Strahlenbündels (12) relativ zum ersten Strahlenbündel (10) während des Bearbeitungsvorgangs aufweist und die durch das mindestens eine zweite Strahlenbündel (12) auf die Oberfläche einwirkende Leistung und die Wechselwirkungszeit des mindestens einen zweiten Strahlenbündels (12) mit der Oberfläche so einstellbar sind, dass das Schmelzbad (28) deformiert wird, um eine Strukturierung der zu bearbeitenden Oberfläche mittels Umschmelzen zu erzielen.

13. Vorrichtung nach Anspruch 12, bei der die Bewegungseinrichtung eine Scaneinrichtung (70) zum Bewegen der Kombination von Strahlenbündeln (10, 12) über die zu bearbeitende Oberfläche oder ein Achssystem zum Bewegen der zu bearbeitenden Oberfläche gegenüber der feststehenden Kombination von Strahlenbündeln (10, 12) umfasst.

14. Vorrichtung nach Anspruch 12 oder 13, wobei die Ablenkung des mindestens einen zweiten Strahlenbündels (12) gegenüber dem ersten Strahlenbündel (10) während des Bearbeitungsvorgangs variabel ist, so dass eine Bahnbewegung des mindestens einen zweiten Strahlenbündels (12) auf der Schmelzbadoberfläche ausführbar ist.

15. Vorrichtung nach einem der Ansprüche 12 bis 14, wobei die erste Strahlenquelle eine Einrichtung (60) zum Einstellen des Durchmessers des ersten Strahlenbündels (10) und die zweite Strahlenquelle eine Einrichtung (61) zum Einstellen des Durchmessers des zweiten Strahlenbündels (12) aufweist, womit die Durchmesser der Strahlenbündel (10, 12) während der Bearbeitung unabhängig voneinander veränderbar sind.

## Claims

1. Method for structuring surfaces by machining with energetic radiation, in which method, during a machining operation, a first bundle (10) of energetic radiation is directed for a predetermined period of time at the surface to be machined, and machining parameters relating to the first bundle of radiation (10) are chosen such that the first bundle of radiation (10) generates a molten bath (28) in the surface to be machined, **characterized in that** at least one second bundle (12) of energetic radiation is superimposed on the first bundle (10), at least in predetermined periods of time, in such a way that it impinges on the surface to be machined at least partially within the extent of the molten bath (28), and the power acting on the surface as a result of the at least one second bundle of radiation (12) and the interacting time of the at least one second bundle of radiation (12) with the surface are chosen such that the molten bath (28) is deformed, in order to achieve structuring of the surface to be machined by means of re-melting.

2. Method according to Claim 1, **characterized in that** the power acting on the surface as a result of the at least one second bundle of radiation (12) and the interacting time of the at least one second bundle of radiation (12) with the surface are chosen such that a small amount of material in comparison with the volume of the molten bath (28) is vaporized out of the molten bath (28).

3. Method according to Claim 1 or 2, **characterized in that**, during the machining operation, the machining takes place on a continuous machining path or a number of successive discrete machining paths on the surface to be machined, so that the molten bath (28) generated by the first bundle of radiation (10) advances along the respective machining path.

4. Method according to one of the preceding claims, **characterized in that** the energetic radiation is laser radiation, wherein in particular the first bundle of radiation (10) is continuous laser radiation and the at least one second bundle of radiation (12) is pulsed laser radiation.

5. Method according to Claim 4, **characterized in that** the laser radiation of the first bundle (10) has a different wavelength than the laser radiation of the second bundle (12).

6. Method according to one of the preceding claims, **characterized in that**, during the machining operation, the volume of the molten bath (28) is changed in a controlled manner by changing the power acting on the surface as a result of the first bundle of radiation (10) and/or the interacting time of the first bundle of radiation (10) with the surface.

7. Method according to one of the preceding claims, **characterized in that**, during the machining operation, the deformation of the molten bath (28) is changed in a controlled manner by changing the power acting on the surface as a result of the second bundle of radiation (12) and/or the interacting time of the second bundle of radiation (12) with the surface.

8. Method according to Claim 6 or 7, **characterized in that** the controlled changing of the power or the interacting time is performed by controlling the machining parameters during the machining operation.

9. Method according to one of the preceding claims, **characterized in that** the at least one second bundle of radiation (12) is deflected with respect to the first bundle of radiation (10), wherein in particular the at least one second bundle of radiation (12) is fixed in place in relation to the first bundle of radiation (10).

10. Method according to one of Claims 1 to 8, **characterized in that** the at least one second bundle of radiation (12) performs a movement on the surface of the molten bath (28) in relation to the first bundle of radiation (10), wherein in particular the speed of the relative movement is changed during the machining operation.

11. Method according to one of the preceding claims, **characterized in that** the at least one second bundle of radiation (12) is activated in periodic or aperiodic cycles.

12. Apparatus for structuring surfaces by machining with energetic radiation, wherein the apparatus (50) comprises a first radiation source (52, 56, 58, 60) for providing a first bundle (10) of energetic radiation, a second radiation source (54, 57, 59, 61, 62, 63, 64, 65) for providing at least one second bundle (12) of energetic radiation, a superimposing device (66) for superimposing the at least two bundles of radiation (10, 12) to form a combination of bundles of radiation (10, 12) and a moving device (70) for performing during a machining operation a controlled relative movement between the combination of bundles of radiation (10, 12) and the surface to be machined, wherein machining parameters concerning the first bundle of radiation (10) can be set such that a molten bath (28) is generated in the surface to be machined and wherein the second radiation source has a deflecting device (62, 63, 64, 65) for deflecting the at least one second bundle of radiation (12) in relation to the first bundle of radiation (10) during the machining operation, and the power acting on the surface as a result of the at least one second bundle of radiation (12) and the interacting time of the at least one second bundle of radiation (12) with the surface can be set such that the molten bath (28) is deformed, in order to achieve structuring of the surface to be machined by means of re-melting.

13. Apparatus according to Claim 12, in which the movement device comprises a scanning device (70) for moving the combination of bundles of radiation (10, 12) over the surface to be machined or a system of axes for moving the surface to be machined with respect to the fixed combination of bundles of radiation (10, 12).

14. Apparatus according to Claim 12 or 13, wherein the deflection of the at least one second bundle of radiation (12) with respect to the first bundle of radiation (10) is variable during the machining operation, so that a movement of the at least one second bundle of radiation (12) can be carried out on a path on the surface of the molten bath.

15. Apparatus according to one of Claims 12 to 14, wherein the first radiation source has a device (60) for setting the diameter of the first bundle of radiation (10) and the second radiation source has a device (61) for setting the diameter of the second bundle of radiation (12), whereby the diameters of the bundles of radiation (10, 12) are variable independently of one another during the machining.

## Revendications

1. Procédé permettant de structurer des surfaces par traitement par un rayonnement énergétique, dans lequel un premier faisceau (10) de rayonnement énergétique est dirigé pendant une opération d'usinage sur la surface à usiner pendant une durée prédéterminée et des paramètres d'usinage concernant le premier faisceau de rayons (10) sont sélectionnés de manière à ce que le premier faisceau de rayons (10) génère un bain de fusion (28) dans la surface à usiner, **caractérisé en ce qu'**au moins un second faisceau (12) de rayonnement énergétique est superposé au premier faisceau (10) au moins pendant des laps de temps prédéterminés de manière à ce qu'il atteigne la surface à usiner au moins en partie à l'intérieur de l'étendue du bain de fusion (28) et **en ce que** la puissance appliquée à la surface par l'au moins un second faisceau de rayons (12) et le temps d'interaction de l'au moins un second faisceau de rayons (12) avec la surface sont sélectionnés de manière à ce que le bain de fusion (28) se déforme pour réaliser par refusion une structuration de la surface à usiner.

2. Procédé selon la revendication 1, **caractérisé en ce que** la puissance appliquée à la surface par l'au moins un second faisceau de rayons (12) et le temps d'interaction de l'au moins un second faisceau de rayons (12) avec la surface sont sélectionnés de manière à ce qu'une petite quantité de matériau se vaporise à partir du bain de fusion (28) par comparaison au volume du bain de fusion (28).

3. Procédé selon la revendication 1 ou 2, **caractérisé en ce que** l'usinage est effectué sur la surface à usiner pendant l'opération d'usinage le long d'un trajet d'usinage continu ou de plusieurs trajets d'usinage discrets consécutifs de manière à ce que le bain de fusion (28) généré par le premier faisceau de rayons (10) se déplace le long du trajet d'usinage respectif.

4. Procédé selon l'une quelconque des revendications précédentes, **caractérisé en ce que** le rayonnement énergétique est un rayonnement laser, et plus particulièrement, dans lequel le premier faisceau de rayons (10) est un rayonnement laser continu et l'au moins un second faisceau de rayons (12) est un rayonnement laser pulsé.

5. Procédé selon la revendication 4, caractérisé en ce lequel le rayonnement laser du premier faisceau (10) présente une autre longueur d'onde que celle du rayonnement laser du second faisceau de rayons (12).

6. Procédé selon l'une quelconque des revendications précédentes, **caractérisé en ce que** le volume du bain de fusion (28) pendant l'opération d'usinage est modifié de manière commandée par une modification de la puissance appliquée à la surface par le premier faisceau de rayons (10) et/ou du temps d'interaction du premier faisceau de rayons (10) avec la surface.

7. Procédé selon l'une quelconque des revendications précédentes, **caractérisé en ce que** la déformation du bain de fusion (28) pendant l'opération d'usinage est modifiée de manière commandée par une modification de la puissance appliquée à la surface par le second faisceau de rayons (12) et/ou du temps d'interaction du second faisceau de rayons (12) avec la surface.

8. Procédé selon la revendication 6 ou 7, **caractérisé en ce que** la modification commandée de la puissance ou du temps d'interaction est effectuée par une régulation des paramètres d'usinage pendant l'opération d'usinage.

9. Procédé selon l'une quelconque des revendications précédentes, **caractérisé en ce que** l'au moins un second faisceau de rayons (12) est dévié par rapport au premier faisceau de rayons (10), et plus particulièrement, dans lequel l'au moins un second faisceau de rayons (12) est en position fixe par rapport au premier faisceau de rayons (10).

10. Procédé selon l'une quelconque des revendications 1 à 8, **caractérisé en ce que** l'au moins un second faisceau de rayons (12) effectue un mouvement sur la surface du bain de fusion (28) par rapport au premier faisceau de rayons (10), et plus particulièrement, dans lequel la vitesse du mouvement relatif est modifiée pendant l'opération d'usinage.

11. Procédé selon l'une quelconque des revendications précédentes, **caractérisé en ce que** l'au moins un second faisceau de rayons (12) est activé au cours de cycles périodiques ou apériodiques.

12. Dispositif de structuration de surfaces par usinage par un rayonnement énergétique, dans lequel le dispositif (50) comprend une première source de rayons (52, 56, 58, 60) destinée à fournir un premier faisceau (10) de rayonnement énergétique, une seconde source de rayons (54, 57, 59, 61, 62, 63, 64, 65) destinée à fournir au moins un second faisceau (12) de rayonnement énergétique, un dispositif de superposition (66) destiné à superposer les au moins deux faisceaux de rayons (10, 12) pour obtenir une combinaison de faisceaux de rayons (10, 12) et un dispositif de déplacement (70) destiné à effectuer un déplacement relatif commandé entre la combinaison de faisceaux de rayons (10, 12) et la surface à usiner pendant une opération d'usinage, dans lequel des paramètres d'usinage concernant le premier faisceau de rayons (10) peuvent être réglés de manière à ce qu'un bain de fusion (28) soit généré dans la surface à usiner et dans lequel la seconde source de rayons comprend un dispositif de déviation (62, 63, 64, 65) destiné à dévier l'au moins un second faisceau de rayons (12) par rapport au premier faisceau de rayons (10) pendant l'opération d'usinage et la puissance appliquée à la surface par l'au moins un second faisceau de rayons (12) et le temps d'interaction de l'au moins un second faisceau de rayons (12) avec la surface peuvent être réglés de manière à ce que le bain de fusion (28) se déforme afin de réaliser par refusion une structure de la surface à usiner.

13. Dispositif selon la revendication 12, dans lequel le dispositif de déplacement comprend un dispositif de balayage (70) destiné à déplacer la combinaison de faisceaux de rayons (10, 12) sur la surface à usiner ou un système d'axes destiné à déplacer la surface à usiner par rapport à la combinaison fixe de faisceaux de rayons (10, 12).

14. Dispositif selon la revendication 12 ou 13, dans lequel la déviation de l'au moins un second faisceau de rayons (12) par rapport au premier faisceau de rayons (10) pendant l'opération d'usinage est variable, de manière à ce qu'un mouvement de l'au moins un second faisceau de rayons (12) le long d'un trajet sur la surface du bain de fusion puisse être effectué.

15. Dispositif selon l'une quelconque des revendications 12 à 14, dans lequel la première source de rayons comprend un dispositif (60) destiné à régler le diamètre du premier faisceau de rayons (10) et dans lequel la seconde source de rayons comprend un dispositif (61) destiné à régler le diamètre du second faisceau de rayons (12) de telle sorte que les diamètres des faisceaux de rayons (10, 12) peuvent être modifiés indépendamment l'un de l'autre pendant l'usinage.
